# EUROPEAN PATENT SPECIFICATION

(11) **EP 4 393 896 B1**
(45) Date of publication and mention of the grant of the patent: **11.02.2026**
(21) Application number: 22905933.2
(22) Date of filing: 24.08.2022
(51) Int. Cl.: C04B 35/14, C04B 35/66, C04B 35/80, C04B 35/622

(54) **FIBER-REINFORCED SILICIOUS MODULE AND PREPARATION METHOD**
FASERVERSTÄRKTES SILIZIUMMODUL UND HERSTELLUNGSVERFAHREN
MODULE SILICEUX RENFORCÉ PAR DES FIBRES ET PROCÉDÉ DE PRÉPARATION

(30) Priority: 15.12.2021 CN 202111534891
(43) Date of publication of application: 03.07.2024
(73) Proprietor: Luoyang Maile Refractory Co., Ltd, Luoyang, Henan 471100 (CN)
(72) Inventor: WANG, Hongmei, Luoyang, Henan 471100 (CN)
(74) Representative: Plavsa, Olga
(86) International application number: PCT/CN2022/114519
(87) International publication number: WO 2023/109174

(56) References cited:
- CN-A- 101 186 517
- CN-A- 101 550 018
- CN-A- 101 550 018
- CN-A- 101 955 363
- CN-A- 101 955 363
- CN-A- 105 732 060
- CN-A- 109 796 214
- CN-A- 113 149 675
- CN-A- 114 163 224
- JP-A- 2000 203 952
- US-B1- 6 313 055

## Description

### TECHNICAL FIELD

The present disclosure belongs to the field of preparation of refractory brick materials for coke ovens, and particularly relates to a fiber-reinforced silicious material and a use method.

### BACKGROUND

At present, during the production in a coke oven, the average temperature of wall surface of a combustion chamber is about 1300 °C, the average temperature of a carbonating chamber is about 1100 °C, and the temperatures of some regions are even higher. At the temperature, a wall body bears the weights of furnace top machinery and upper masonry, while wall surfaces are subjected to erosion by dry distillation gases and ashes, as well as an expansion pressure of furnace materials and a pushing pressure on the coke side. Therefore, it is required that a refractory wall body has good tightness, thermal conductivity, high load softening temperature, strong high-temperature corrosion resistance, and high overall structural strength.

However, by taking a 5.5 m high coke oven as an example, 120 mm thick ordinary silica bricks are usually used to build 46 layers of flue. There are mortar joints between bricks and between layers. These mortar joints are parts that are firstly eroded and damaged in the process of using the coke oven. Ordinary products use a compression molding technology, which limits the height and width of silica bricks, increases an area of mortar joints in coke oven silica brick masonry. The enlargement of the size of silicon products will reduce the area of the mortar joint area in coke oven silica brick masonry, but four problems will be encountered: 1, cracking during the firing; 2, control of the dimensional tolerance of silica bricks; 3, weakening of compressive strength; and 4, limitation of manufactured shapes. In addition, the coke oven masonry is cumbersome and long in construction period, and the coke oven needs to be baked for a long time after the completion of masonry.

Chinese patent document CN101550018A discloses a silica fire resistant castable and a preparing method thereof, which includes: mixing quartz grain by weight of 65-75 wt%, rock quartz fine powder by weight of 20-28 wt%, silicon micronized quartz powder by weight of 2-8 wt%, cement by weight of 1-3 wt%, sodium tripolyphosphate by weight of 0.1-0.2 wt% and sodium hexametaphosphate by weight of 0.05-0.1 wt%, than adding water by weight of 5-10 wt% to the above mixed material, stirring evenly, vibration molding, drying; then sintering under condition of 590-800 °C.

Chinese patent document CN101955363A discloses a refractory castable for a head insert of a waste heat boiler of an ethylene cracking furnace. The head insert castable is prepared by mixing the following components in percentage by weight: 85-95 wt% of tabular corundum, 0.5-3 wt% of silica micro-powder, 2-8 wt% of activated alumina and 1.5-7 wt% of calcium aluminate cement serving as raw materials, and 0.1-5 wt% of dispersed alumina ADS/ADW and 0.02-0.2 wt% of explosion-proof fiber.

Therefore, it is urgent for a product with a small mortar joint area, strong high-temperature corrosion resistance, high overall structural strength, good fire resistance, fast masonry and fast oven baking to replace the current traditional silica bricks for coke ovens.

### SUMMARY

In view of the above problems, the objective of the present disclosure is to provide a fiber-reinforced silicious material that has a small mortar joint area, strong high-temperature corrosion resistance, high overall structural strength, good fire resistance, fast masonry and fast baking.

In order to achieve the above objective, the technical solution adopted by the present disclosure is set out in the appended set of claims.

By adopting the above technical solution, the present disclosure has the following beneficial effects:
1. A modular pouring integrated molding process is adopted, the coke oven is designed into a refractory material pouring module with a certain shape and size, and the design and machining of a mold and the pouring and baking of a module are carried out to ultimately complete the masonry. Compared with the traditional silica brick masonry, the fiber-reinforced silicious module of the present disclosure has the advantages:
   (1) the module is suitable for making products with various sizes and shapes and making large and irregular members that are difficult to achieve by machine pressing, with greatly reduced mold making cost;
   (2) the module can be prefabricated in advance according to its size and shape, and can be directly assembled by masonry or hanging on site according to the drawings, thereby greatly reducing maintenance time; labor costs are saved due to no need for a large number of professional masonry workers; the masonry period is expected to be shortened by more than half, thereby creating better economic benefits for customers;
   (3) one module can replace at least 100 ordinary silica bricks, which reduces the design of mortar joints and grooves in the process of masonry, greatly reduces the ash joints in coke oven silica brick masonry, improves volume stability, thermal shock resistance and impact resistance and prolongs the service life of the coke oven. Fast oven baking improves maintenance efficiency.
2. The explosion-proof fibers and reinforced fiber are added and complexed in a preferred ratio. From the strength test results, it can be seen that the product can improve the strength of the module while preventing cracking. By optimizing the temperature and humidity maintenance system, a product that is easy to demould and has a smooth surface can be obtained.
3. By optimizing the ratio of raw materials, it can be seen by the scanning electron microscopy results that a large silicious module with good high-temperature corrosion resistance is obtained under the optimal conditions.

### BRIEF DESCRIPTION OF THE DRAWINGS

FIG. 1 is a microscopic structure diagram of a product in Example 1 after undergoing an anti-erosion test.
FIG. 2 is a microscopic structure diagram of a product in Example 2 after undergoing an anti-erosion test.
FIG. 3 is a microscopic structure diagram of a product in Example 3 after undergoing an anti-erosion test.
FIG. 4 is a microscopic structure diagram of a product in Example 4 after undergoing an anti-erosion test.
FIG. 5 and FIG. 6 are microscopic structure diagrams of a product in Example 7 at different magnifications.
FIG. 7 and FIG. 8 are microscopic structure diagrams of a product in Example 8 at different magnifications.

### DETAILED DESCRIPTION OF THE EMBODIMENTS

It should be understood that specific embodiments described here are only for explaining the present disclosure, but not are intended to limit the present disclosure.

Example 1: a fiber-reinforced silicious module was obtained by using a modular pouring integrated molding process, namely, mold design and machining were performed according to the shape of a coke oven, then the pouring and roasting of the module were performed and finally masonry was completed. The height of the fiber-reinforced silicious module product of the present disclosure could be up to a height of 6-10 layers of traditional silica bricks, which was ≤1.3 m; its length was a length of 2-5 standing fire paths, which was ≤2.2 m; its width was a width of 1 standing fire path, which was ≤1 m.

It should be noted that in the present disclosure, the coke oven is entirely made as a module, but it does not represent that the components of the present disclosure cannot be made into silica bricks separately, and then the silica bricks can be built into the coke oven. However, in the present disclosure, the module is made into a whole by directly pouring in the coke oven, with a better effect.

A method for preparing the fiber-reinforced silicious module of the present disclosure specifically comprises the following steps:
S1. Weighing main raw materials (in parts by weight). 82 parts of quartz aggregates, 2 parts of aluminate cement and 15 parts of zirconium-containing silica powders were weighed.
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, water accounting for 4% of a total weight of main raw materials and silica sol accounting for 7% of a total weight of main raw materials. The above-mentioned main raw materials and auxiliary materials were mixed for 10 min by using a high-speed mixed mill to obtain the slurry.
S3. Pouring and forming. The slurry was put into a vibrating platform to be vibrated for 2-3 min. After bubbles were eliminated, the prepared slurry was poured into a designed modular mold by layered pouring. Meanwhile, the slurry was subjected to vibration forming using a vibrating rod for 4 min so as to complete the pouring and forming.
S4. Maintenance. A maintenance method was temperature-controlling high-humidity maintenance, the temperature of the maintenance environment was 25°C, the humidity was 35%, and the maintenance time was 100 h.
S5. Removing the mold. The mold was removed after maintenance was ended, the drying temperature was 120 °C, and the drying time was 100 h.
S6. Sintering. The above poured and formed large silicious module was sintered in a muffle furnace at 1400 °C. As the furnace was heated, the heating rate was 10 °C/min, and the insulation time was 10 h to obtain the large fiber-reinforced silicious module.

In the above step S1, the quartz aggregate was fused quartz with a particle size of ≤90 µm; the refractory cement was aluminate cement with a particle size of ≤5 µm; the zirconium-containing silica powder had a purity of ≥97% and a particle size of ≤1 µm.

In the above step S1, the content (refers to mass percentage, the same below) of SiO₂+ZrO₂ in the zirconium-containing silica powder was >99%, wherein the mass percentage of ZrO₂ was 2%.

In the above step S2, the melting point of the low-melting-point explosion-proof fiber was 110-120 °C, and the melting point of the high-melting-point explosion-proof fiber was 140-160 °C.

Example 2: experimental steps were the same as those in Example 1 except that:
S1. Weighing main raw materials (in parts by weight). 87 parts of quartz aggregates, 2 parts of portland cement and 10 parts of zirconium-containing silica powders were weighed.
S2. Preparing slurry. The weighed main raw materials were mixed for 20 min through a three-dimensional mixer, and then auxiliary materials were added, wherein the proportions of the added auxiliary materials were as follows: sodium hexametaphosphate accounting for 0.2% of a total weight of main raw materials, a low-melting-point explosion-proof fiber accounting for 0.02% of a total weight of main raw materials, a high-melting-point explosion-proof fiber accounting for 0.04% of a total weight of main raw materials, water accounting for 3% of a total weight of main raw materials and silica sol accounting for 8% of a total weight of main raw materials. The above-mentioned main raw materials and auxiliary materials were mixed for 10 min by using a high-speed mixed mill to obtain the slurry.

Example 3: experimental steps were the same as those in Example 1 except that:
S1. Weighing main raw materials (in parts by weight). 92 parts of quartz aggregates, 1 part of aluminate cement and 7 parts of zirconium-containing silica powders were weighed.
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.1% of a total weight of main raw materials and sodium hexametaphosphate accounting for 0.2% of a total weight of main raw materials, a low-melting-point explosion-proof fiber accounting for 0.02% of a total weight of main raw materials, a high-melting-point explosion-proof fiber accounting for 0.04% of a total weight of main raw materials, water accounting for 2% of a total weight of main raw materials and silica sol accounting for 10% of a total weight of main raw materials. The above-mentioned main raw materials and auxiliary materials were mixed for 10 min by using a high-speed mixed mill to obtain the slurry.

Example 4: experimental steps were the same as those in Example 1 except that:
S1. Weighing main raw materials (in parts by weight). 84 parts of quartz aggregates, 2 parts of aluminate cement and 14 parts of zirconium-containing silica powders were weighed.
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.2% of a total weight of main raw materials and sodium hexametaphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, water accounting for 2% of a total weight of main raw materials and silica sol accounting for 12% of a total weight of main raw materials. The above-mentioned main raw materials and auxiliary materials were mixed for 10 min by using a high-speed mixed mill to obtain the slurry.

Example 5: experimental steps were the same as those in Example 4 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.2% of a total weight of main raw materials and sodium hexametaphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, quartz fiber accounting for 0.1% of a total weight of main raw materials, water accounting for 2% of a total weight of main raw materials and silica sol accounting for 12% of a total weight of main raw materials. The above-mentioned main raw materials and auxiliary materials were mixed for 10 min by using a high-speed mixed mill to obtain the slurry.
S6. Sintering. The above poured and formed large silicious module was sintered in a muffle furnace at 1300 °C. As the furnace was heated, the heating rate was 10 °C/min, and the insulation time was 10 h to obtain the large fiber-reinforced silicious module.

In the above step S2, the diameter of the quartz fiber was 0.5-8 µm. Of course, other inorganic fibers were selected according to actual needs, such as high silica fiber, ceramic fiber, or zirconium fiber cotton.

Example 6: experimental steps were the same as those in Example 5 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.2% of a total weight of main raw materials and sodium hexametaphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, quartz fiber accounting for 0.2% of a total weight of main raw materials, water accounting for 2% of a total weight of main raw materials and silica sol accounting for 12% of a total weight of main raw materials. The above-mentioned main raw materials and auxiliary materials were mixed for 10 min by using a high-speed mixed mill to obtain the slurry.

Example 7: experimental steps were the same as those in Example 5 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.2% of a total weight of main raw materials and sodium hexametaphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, quartz fiber accounting for 0.5% of a total weight of main raw materials, water accounting for 2% of a total weight of main raw materials and silica sol accounting for 12% of a total weight of main raw materials. The above-mentioned main raw materials and auxiliary materials were mixed for 10 min by using a high-speed mixed mill to obtain the slurry.

Example 8: experimental steps were the same as those in Example 5 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.2% of a total weight of main raw materials and sodium hexametaphosphate accounting for 0.1% of a total weight of main raw materials, a low-melting-point explosion-proof fiber accounting for 0.02% of a total weight of main raw materials, a high-melting-point explosion-proof fiber accounting for 0.04% of a total weight of main raw materials, quartz fiber accounting for 1% of a total weight of main raw materials, water accounting for 2% of a total weight of main raw materials and silica sol accounting for 12% of a total weight of main raw materials. The above-mentioned main raw materials and auxiliary materials were mixed for 10 min by using a high-speed mixed mill to obtain the slurry.

Example 9: experimental steps were the same as those in Example 1 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.1% of a total weight of main raw materials, a high-melting-point explosion-proof fiber accounting for 0.1% of a total weight of main raw materials, water accounting for 4% of a total weight of main raw materials and silica sol accounting for 7% of a total weight of main raw materials. The above-mentioned main raw materials and auxiliary materials were mixed for 10 min by using a high-speed mixed mill to obtain the slurry.
S4. Maintenance. A maintenance method was temperature-controlling high-humidity maintenance, and the temperature of the maintenance environment was 8 °C.

Example 10: experimental steps were the same as those in Example 1 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.1% of a total weight of main raw materials, a high-melting-point explosion-proof fiber accounting for 0.03% of a total weight of main raw materials, a low-melting-point explosion-proof fiber accounting for 0.03% of a total weight of main raw materials, water accounting for 4% of a total weight of main raw materials and silica sol accounting for 7% of a total weight of main raw materials. The above-mentioned main raw materials and auxiliary materials were mixed for 10 min by using a high-speed mixed mill to obtain the slurry.
S4. Maintenance. A maintenance method was temperature-controlling high-humidity maintenance, and the temperature of the maintenance environment was 22 °C.

Example 11: experimental steps were the same as those in Example 1 except that:
S4. Maintenance. A maintenance method was temperature-controlling high-humidity maintenance, and the temperature of the maintenance environment was 38 °C.

Example 12: experimental steps were the same as those in Example 1 except that:
S2. Preparing slurry. The weighed main raw materials were mixed for 20 min through a three-dimensional mixer, and then auxiliary materials were added, wherein the proportions of the added auxiliary materials were as follows: sodium tripolyphosphate accounting for 0.1% of a total weight of main raw materials, a high-melting-point explosion-proof fiber accounting for 0.02% of a total weight of main raw materials, a low-melting-point explosion-proof fiber accounting for 0.04% of a total weight of main raw materials, water accounting for 4% of a total weight of main raw materials and silica sol accounting for 7% of a total weight of main raw materials. The above-mentioned main raw materials and auxiliary materials were mixed for 10 min by using a high-speed mixed mill to obtain the slurry.
S4. Maintenance. A maintenance method was temperature-controlling high-humidity maintenance, and the temperature of the maintenance environment was 26 °C.

Comparison of raw materials and step conditions in each example is shown in Table 1, wherein examples 1-4 and 8- 12 are comparative examples.

**Table 1**

| Steps | conditions | Exa mple 1 | Exa mple 2 | Exa mple 3 | Exa mple 4 | Exa mple 5 | Exa mple 6 | Exa mple 7 | Exa mple 8 | Exa mple 9 | Exa mple 10 | Exa mple 11 | Exa mple 12 |
|---|---|---|---|---|---|---|---|---|---|---|---|---|---|
| S1. Weigh | Quartz aggregate | 82 | 87 | 92 | 84 | 84 | 84 | 84 | 84 | 82 | 82 | 82 | 82 |
| raw materials (in parts by weight) | Aluminate cement | 2 | | 1 | 2 | 2 | 2 | 2 | 2 | 2 | 2 | 2 | 2 |
| | Portland cement | | 2 | | | | | | | | | | |
| | Zirconium-containin g silica powder | 15 | 10 | 7 | 14 | 14 | 14 | 14 | 14 | 15 | 15 | 15 | 15 |
| S2. Preparing slurry (relative to the weight percentage of main raw materials | Sodium tripolyphosphate | 0.1 | | 0.1 | 0.2 | 0.2 | 0.2 | 0.2 | 0.2 | 0.1 | 0.1 | 0.1 | 0.1 |
| | Sodium hexametaphosphate | | 0.2 | 0.2 | 0.1 | 0.1 | 0.1 | 0.1 | 0.1 | | | | |
| | Low-melting-point explosion-proof fiber | 0.02 | 0.02 | 0.02 | 0.02 | 0.02 | 0.02 | 0.02 | 0.02 | | 0.03 | 0.02 | 0.04 |
| | High-melting-point explosion-proof fiber | 0.04 | 0.04 | 0.04 | 0.04 | 0.04 | 0.04 | 0.04 | 0.04 | 0.1 | 0.03 | 0.04 | 0.02 |
| | Quartz fiber | | | | | 0.1 | 0.2 | 0.5 | 1 | | | | |
| | Water | 4 | 3 | 2 | 2 | 2 | 2 | 2 | 2 | 4 | 4 | 4 | 4 |
| | Silica sol | 7 | 8 | 10 | 12 | 12 | 12 | 12 | 12 | 7 | 7 | 7 | 7 |
| S4. Maintenance | Maintenance temperature (°C) | 25 | 25 | 25 | 25 | 25 | 25 | 25 | 25 | 8 | 22 | 38 | 26 |
| S6. Sintering | Sintering temperature (°C) | 1400 | 1400 | 1400 | 1400 | 1300 | 1300 | 1300 | 1300 | 1400 | 1400 | 1400 | 1400 |

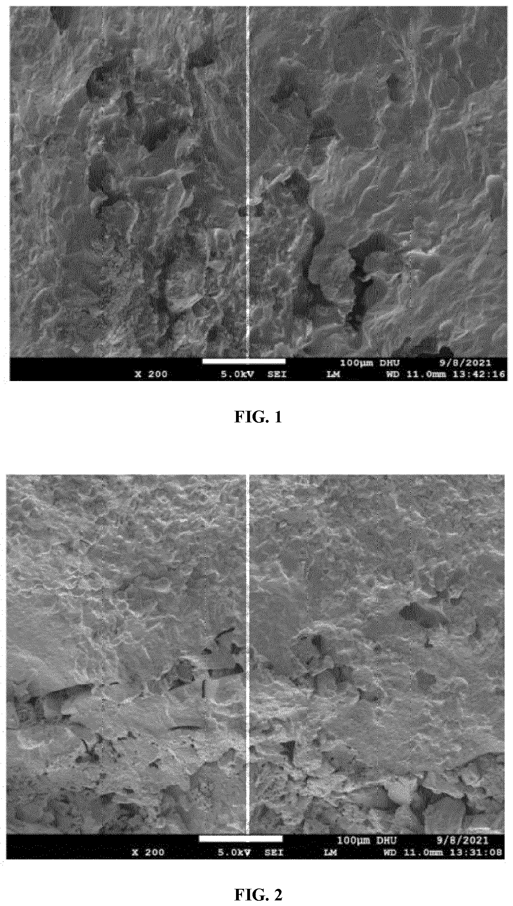

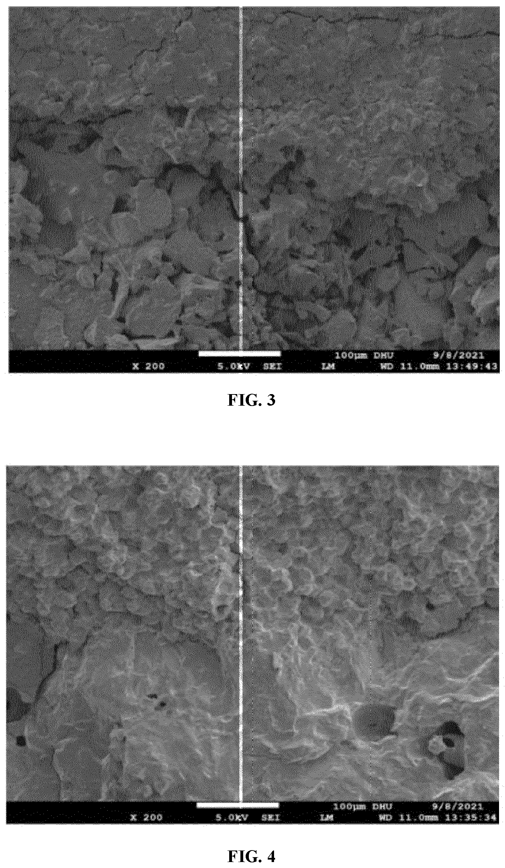

Anti-erosion test and interface morphology analysis. The anti-erosion test was carried out by using a molten alkali crucible method in accordance with the requirements of the Test Method for Alkaline Resistance of Refractory Materials (GB/T14983-2008). An erosion medium was Na₂CO₃, and a certain amount of alkali salt potassium carbonate was placed inside a sample. At a high temperature, Na₂CO₃ reacted with the experimental material to produce volume expansion. After the alkali resistance test, the degree of erosion damage of the sample was observed with naked eyes so as to determine the alkali erosion resistance of the refractory material. The temperature was raised to 1500 °C at the heating rate of (4-6) °C/min and maintained for 5 h. After cooling, the sample was taken and checked for cracking condition. FIG. 1 shows a microscopic structure diagram of a product in Example 1 after undergoing an anti-erosion test; FIG. 2 shows a microscopic structure diagram of a product in Example 2 after undergoing an anti-erosion test; FIG. 3 shows a microscopic structure diagram of a product in Example 3 after undergoing an anti-erosion test; FIG. 4 shows a microscopic structure diagram of a product in Example 4 after undergoing an anti-erosion test.

From FIG. 1, it can be seen that the sample is relatively loose and not dense in structure. Under the erosion of alkaline environment, some substances have already been transformed into a glassy state. From FIG. 3, it can also be seen that the sample has also been severely eroded, with a moderate degree of glass transition. From FIG. 2 and FIG. 4, it can be seen that although the sample in FIG. 2 is relatively dense in structure, there is still a certain gap between the sample in FIG. 2 and the sample in FIG. 4. Therefore, the microstructure in FIG. 4 indicates that the sample has strong anti-erosion performance.

The chemical component characterization results of samples in Example 1, Example 2, Example 3 and Example 4 are shown in Table 2.

**Table 2**

| Chemical components | SiO₂ | Na₂O+K₂O | Al₂O₃ | Fe₂O₃ |
|---|---|---|---|---|
| Example 1 | 94.0 wt% | 3.0 wt% | 0 wt% | 1.0 wt% |
| Example 2 | 96.0 wt% | 0.5 wt% | 0.5 wt% | 0.6 wt% |
| Example 3 | 98.9 wt% | 0.1 wt% | 0.2 wt% | 0.1 wt% |
| Example 4 | 96.6 wt% | 1.0 wt% | 2.0 wt% | 0 wt% |

The comparison data between relevant test performances in Example 4 and performances of ordinary coke oven silica bricks are shown in Table 3.

**Table 3**

| Performance index | Products of the present disclosure | Ordinary coke oven silica bricks |
|---|---|---|
| Compression strength (MPa) | 55 | 45 |
| Apparent porosity (%) | 12 | 20 |
| Volume density (g/cm³) | 1.95 | 1.85 |
| Thermal shock stability (1100 °C, water cooling, times) | 25 | 0 |

Relative to the bending strength of the sample in Example 4, the increase percentage of the bending strengths of the samples in Example 5, Example 6, Example 7 and Example 8 are shown in Table 4. From Table 4, it can be seen that when the mass percentage of the added quartz fiber reaches 0.5 wt%, the large fiber-reinforced silicious module sample exhibits the best bending strength.

**Table 4**

| Types of samples | Increase percentage in flexural strength |
|---|---|
| Example 5 | 8.0 |
| Example 6 | 3.1 |
| Example 7 | 26.7 |
| Example 8 | 17.4 |

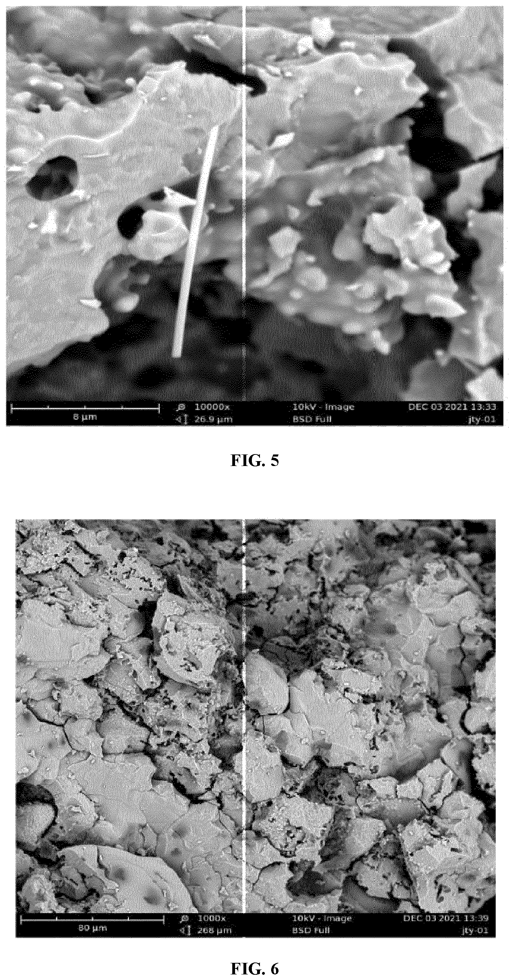

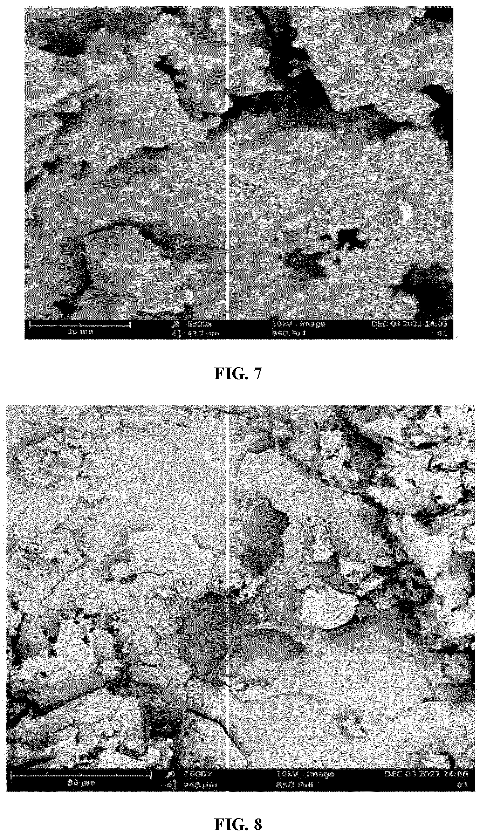

FIG. 5 and FIG. 6 are microscopic structure diagrams of a product in Example 7 at different magnifications, and FIG. 7 and FIG. 8 are microscopic structure diagrams of a product in Example 8 at different magnifications. The quartz fibers can be seen in both FIG. 5 and FIG.7. The quartz fibers in Example 7 and Example 8 are distributed in different parts of the large silicious module, and meanwhile there are also differences in diameters and lengths of the quartz fibers in Example 7 and Example 8. From FIG. 6 and FIG. 8, it can be seen that there is a certain difference in structure densities between large fiber-reinforced silicious modules in Example 7 and Example 8. From the test results, it can be seen that the local structure density in FIG. 8 is better than that in FIG. 6.

The demoulding difficulty, the product surface smoothness, and the moisture content (wt%) at the center of the sample (size: 500 * 500 * 500 mm) in Example 9, Example 10, Example 11 and Example 12 are shown in Table 5.

**Table 5**

| Parameter name | Example 9 | Example 10 | Example 11 | Example 12 |
|---|---|---|---|---|
| Maintenance temperature (°C) | 8 | 22 | 38 | 26 |
| Difficulty of demoulding | Difficult demoulding | Extremely easy demoulding | Difficult demoulding | Extremely easy demoulding |
| Surface smoothness | Surface material shortage, forming pores | Smooth surface | Rough surface with adhesive mold fragments | Smooth surface |
| Moisture content (wt%) | 1.5 | 0.9 | 0.3 | 0.6 |

For those skilled in the art it is evident that the present disclosure is not limited to the details of the above-mentioned exemplary embodiments.

Therefore, from any perspective, the embodiments should be regarded as being exemplary but not limiting, and the scope of the present disclosure is limited by the appended claims.

Furthermore, it should be understood that although this specification is described according to the embodiments, but not every embodiment only includes an independent technical solution. This description in the specification is for clarity only. Those skilled in the art should use the specification as a whole, and the technical solutions in each embodiment can be also appropriately combined to form other embodiments that those skilled in the art can understand.

## Claims

1. A fiber-reinforced silicious material, wherein the preparation of raw materials comprises the following main raw materials in parts by weight: 84 parts of quartz aggregates, 2 parts of refractory cement and 14 parts of zirconium-containing silica powders;
the preparation of the raw materials also comprises the following auxiliary materials: a dispersing agent accounting for 0.3% of a total weight of main raw materials, a low-melting-point explosion-proof fiber with a melting point of 110-120 °C accounting for 0.02% of a total weight of main raw materials, a high-melting-point explosion-proof fiber with the melting point of 140-160 °C accounting for 0.04% of a total weight of main raw materials, a reinforced fiber accounting for greater than 0 to less than 1% of a total weight of main raw materials, wherein the reinforced fiber is quartz fiber, water accounting for 2% of a total weight of main raw materials and silica sol accounting for 12% of a total weight of main raw materials;
the quartz aggregate is fused quartz with a particle size of ≤90 µm; the refractory cement is aluminate cement with a particle size of ≤5 µm; the zirconium-containing silica powder has a purity of ≥97% and a particle size of ≤1 µm; and
the mass percentage content of SiO₂+ZrO₂ in the zirconium-containing silica powder is >99%, wherein the mass percentage content of ZrO₂ is 2%-3%.

2. The fiber-reinforced silicious material according to claim 1, wherein the dispersing agent is a combination of one or two of sodium tripolyphosphate and sodium hexametaphosphate.

3. A preparation method for forming a silicious module for a coke oven by pouring the fiber-reinforced silicious material according to claim 1 into a mold.

4. The preparation method according to claim 3, wherein the method comprises a maintenance step, and the temperature of the maintenance step is 22-26 °C.

## Patentansprüche

1. Ein faserverstärktes Siliziummaterial, bei dem die Herstellung der Rohstoffe die folgenden Hauptrohstoffe in Gewichtsanteilen umfasst: 84 Teile Quarzaggregate, 2 Teile feuerfester Zement und 14 Teile zirconiumhaltiges Silikapulver;
die Herstellung der Rohstoffe umfasst außerdem die folgenden Hilfsstoffe: ein Dispergiermittel, das 0,3 % des Gesamtgewichts der Hauptrohstoffe ausmacht, eine niedrigschmelzende, explosionsgeschützte Faser mit einem Schmelzpunkt von 110-120 °C, die 0,02 % des Gesamtgewichts der Hauptrohstoffe ausmacht, eine hochschmelzende, explosionsgeschützte Faser mit einem Schmelzpunkt von 140-160 °C, die 0,04 % des Gesamtgewichts der Hauptrohstoffe ausmacht, eine verstärkende Faser, die mehr als 0 % und weniger als 1 % des Gesamtgewichts der Hauptrohstoffe ausmacht, wobei die verstärkende Faser aus Quarzfaser besteht, Wasser, das 2 % des Gesamtgewichts der Hauptrohstoffe ausmacht, und Siliksol, das 12 % des Gesamtgewichts der Hauptrohstoffe ausmacht;
das Quarzaggregat ist geschmolzener Quarz mit einer Partikelgröße von ≤ 90 µm; der feuerfeste Zement ist Aluminatzement mit einer Partikelgröße von ≤ 5 µm; das zirconiumhaltige Silikapulver hat eine Reinheit von ≥ 97 % und eine Partikelgröße von ≤ 1 µm;
und der Massenanteil von SiO2 + ZrO2 im zirconiumhaltigen Silikapulver beträgt > 99 %, wobei der Massenanteil von ZrO2 2 %-3 % beträgt.

2. Das faserverstärkte Siliziummaterial nach Anspruch 1, wobei das Dispergiermittel eine Kombination aus einem oder zwei der Stoffe Natriumtripolyphosphat und Natriumhexametaphosphat ist.

3. Ein Herstellungsverfahren zur Formung eines Siliziummoduls für einen Koksofen durch Gießen des faserverstärkten Siliziummoduls nach Anspruch 1 in eine Form.

4. Das Herstellungsverfahren nach Anspruch 3, wobei das Verfahren einen Erhaltsschritt umfasst und die Temperatur des Erhaltsschritts 22-26 °C beträgt.

## Revendications

1. Un matériau siliceux renforcé par des fibres, dans lequel la préparation des matières premières comprend les principales matières premières suivantes en parties pondérales : 84 parties d'agrégats de quartz, 2 parties de ciment réfractaire et 14 parties de poudres de silice contenant du zirconium ;
la préparation des matières premières comprend également les matériaux auxiliaires suivants : un agent de dispersion représentant 0,3 % du poids total des matières premières principales, une fibre pare-explosion à bas point de fusion avec un point de fusion de 110-120 °C représentant 0,02 % du poids total des matières premières principales, une fibre pare-explosion à haut point de fusion avec un point de fusion de 140-160 °C représentant 0,04 % du poids total des matières premières principales, une fibre de renforcement représentant plus de 0 et moins de 1 % du poids total des matières premières principales, dans laquelle la fibre de renforcement est une fibre de quartz, de l'eau représentant 2 % du poids total des matières premières principales et un sol de silice représentant 12 % du poids total des matières premières principales ;
les agrégats de quartz sont du quartz fondu avec une taille de particule ≤ 90 µm ; le ciment réfractaire est du ciment d'aluminate avec une taille de particule ≤ 5 µm ; la poudre de silice contenant du zirconium a une pureté ≥ 97 % et une taille de particule ≤ 1 µm ; et
la teneur massique en SiO₂ et ZrO₂ dans la poudre de silice contenant du zirconium est > 99 %, dans laquelle la teneur massique en ZrO₂ est de 2 % à 3 %.

2. Le matériau siliceux renforcé par des fibres selon la revendication 1, dans lequel l'agent de dispersion est une combinaison d'un ou deux des éléments suivants : tripolyphosphate de sodium et hexamétaphosphate de sodium.

3. Un procédé de préparation pour former un module siliceux pour un four à coke en versant le matériau siliceux renforcé par des fibres selon la revendication 1 dans un moule.

4. Le procédé de préparation selon la revendication 3, dans lequel le procédé comprend une étape de maintien, et la température de l'étape de maintien est de 22-26 °C.
